# EUROPEAN PATENT APPLICATION

(11) **EP 4 283 258 A1**
(43) Date of publication of application: **29.11.2023**
(21) Application number: 23175171.0
(22) Date of filing: 24.05.2023
(51) Int. Cl.: G01C 21/20, G01C 21/22, G01C 21/00

(54) **SYSTEM AND METHOD FOR TRACKING OF SEARCH TARGETS VIA DYNAMIC PROBABILISTIC OCCUPANCY MAP**

(30) Priority: 24.05.2022 US 202217752366
(71) Applicant: Rockwell Collins, Inc., Cedar Rapids, IA 52498 (US)
(72) Inventor: JAKUSZ, Jason J., Nixa, 65714 (US); PAOKE, Daniel K., Marion, 52302 (US)
(74) Representative: Dehns

(57) **Abstract**

A system and method for dynamic probabilistic tracking of search targets within a search area (100) generates a displayable occupancy map (212) of the search area. The occupancy map is divided into individual map cells (300) and seeded with a list (214) of unlocated targets (e.g., targets of one or more types known or thought to be within the search area but which have not been precisely located therewithin). Each map cell of the occupancy map reflects the confidence or likelihood that an unlocated target will be detected within that cell. As a search mission proceeds, sensor datasets are received from the searching assets and correlated to identify unlocated targets. As unlocated targets are detected, located with sufficient accuracy, and removed from the list, the confidence levels (304, 306, 308, 310) of other map cells are reflected to indicate changes in the probability that any remaining unlocated targets will be detected therein.

## Description

### BACKGROUND

Search-oriented missions, whether conducted by humans or by sensor-equipped unmanned vehicles, whether civilian or military in nature, involve searching a defined region and locating therein targets of interest. Maintaining a log of potential target locations, and monitoring the progress of the search through the search area, are applicable across a wide variety of mission applications, e.g., reconnaissance missions, search-and-destroy (SAD) missions, search-and-rescue (SAR) missions. However, as a given search mission progresses and multiple sensor readings are taken, the log of potential target locations may quickly become unmanageable in size.

### SUMMARY

In a first aspect, a method for dynamic probabilistic tracking of search targets within a search area is disclosed. In embodiments, the method includes generating an occupancy map mapping a search area to be searched (e.g., via search-and-rescue, search-and-destroy, and/or other search/reconnaissance type missions) by a search team of one or more searching assets; a user or operator may view or interact with the occupancy map via a display system (e.g., interactive touchscreen). The method includes dividing the occupancy map into a set of component map cells. The method includes seeding the occupancy map with an unlocated target list, or a list of targets of interest believed to be within the search area but whose precise location therein is as yet undetermined by the searching assets. The method includes receiving sensor data collected by each searching asset, each set of sensor data corresponding to an area (e.g., one or more map cells, a portion of a map cell) sensed by that searching asset. The method includes, based on the received sensor data, updating the occupancy map to adjust (e.g., based on whether or not an unlocated target has been detected) the confidence levels of individual map cells or regions within the occupancy map, where each confidence level indicates probability that an unlocated target on the list will be found within that map cell or region. The method includes removing from the list of unlocated targets any target detected and/or precisely located within the occupancy map by the searching assets.

In some embodiments, the occupancy map is associated with a hierarchy of discrete confidence levels.

In some embodiments, the occupancy map is associated with a continuous set of confidence levels (e.g., percentages, floating points, and/or fractional probabilities).

In some embodiments, the occupancy map (or a portion thereof, or one or more map cells thereof) is associated with multiple confidence levels, each confidence level associated with a particular classification or type of unlocated target.

In some embodiments, the occupancy map incorporates component map cells of more than one size.

In some embodiments, the received sensor data includes partial searches by a searching asset of a portion of a map cell.

In some embodiments, the method includes seeding the occupancy map with an initial state set including initial confidence levels or probabilities associated with the possible locations of unlocated targets within cells or regions of the occupancy map, prior to commencement of the search mission.

In some embodiments, the method includes adding an unlocated target detected, or precisely located, by the search team to a list of located targets associated with the occupancy map.

In some embodiments, the method includes distributing correlated sensor data to each searching asset of the search team.

In a further aspect, a system for dynamic probabilistic tracking of targets of interest within a search area is also disclosed. In embodiments, the system includes a communications system (e.g., signal transmitter/receiver) for receiving search data sensed and collected by a team of searching assets executing a search mission within a defined search area. The system includes a memory for storing a list of unlocated targets of interest, each unlocated target believed to be within the search area but its precise presence and/or location therein as yet undetermined. The system includes one or more processors for generating an occupancy map of the search area. The occupancy map is divided into a set of component map cells, each cell a defined subset of the search area. The system seeds the occupancy map with the list of unlocated targets (e.g., the unlocated targets defining the search mission). Based on the search data received from each searching asset, the system updates the occupancy map by adjusting confidence levels associated with individual map cells or with portions/regions of the occupancy map (e.g., based on whether or not an unlocated target has been detected), each confidence level indicating a probability that an unlocated target will be found within that map cell/portion/region. For each unlocated target detected and/or precisely located within the occupancy map by the searching assets, the system removes the target from the list of unlocated targets.

In some embodiments, each confidence level is part of a hierarchy of discrete confidence levels.

In some embodiments, each confidence level is part of a set of continuous confidence levels, e.g., fractional probabilities or percentages.

In some embodiments, one or more map cells (or a region/portion of the occupancy map) are associated with multiple confidence levels, each confidence level associated with a probability that a particular classification or type of unlocated target will be found within the map cell/portion/region.

In some embodiments, the occupancy map incorporates component map cells of more than one size.

In some embodiments, the received sensor data includes partial searches by a searching asset of a portion of a map cell.

In some embodiments, the system seeds the occupancy map with an initial state set including initial confidence levels or probabilities associated with the possible locations of unlocated targets within cells or regions of the occupancy map, prior to commencement of the search mission.

In some embodiments, the system maintains (e.g., in memory) a list of located targets associated with the search mission and/or occupancy map, adding each unlocated target detected, or precisely located, by the search team to the list of located targets.

In some embodiments, the method includes distributing correlated sensor data to each searching asset of the search team. For example, sensor data sensed and collected by a particular searching asset is correlated by the system and distributed to the other searching assets.

In some embodiments, the searching assets are unmanned aerial vehicles (UAV) or unmanned aircraft systems (UAS), and the system is embodied in a UAV/UAS of the search team. For example, the system may be embodied aboard a non-searching UAV of the search team positioned to serve as a communications relay node for actively searching assets.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a diagrammatic illustration of a search area to be searched for targets by a team of searching assets according to example embodiments of this disclosure;
FIG. 2 is a block diagram of a system for dynamic probabilistic tracking of search targets within the search area by the search team of FIG. 1;
FIG. 3 is a diagrammatic illustration of an occupancy map generated by the system of FIG. 2 and divided into map cells;
FIG. 4 is a diagrammatic illustration of the occupancy map of FIG. 3, seeded with an initial state set by the system of FIG. 2;
FIG. 5A is a diagrammatic illustration of the occupancy map of FIG. 4, updated to reflect search data received by the system of FIG. 2 by the searching assets of FIGS. 1 and 2;
FIG. 5B is a diagrammatic illustration of the occupancy map of FIG. 5A, updated to reflect further search data received by the system of FIG. 2 by the searching assets of FIGS. 1 and 2;
FIG. 5C is a diagrammatic illustration of the occupancy map of FIG. 5B, updated to reflect further search data received by the system of FIG. 2 by the searching assets of FIGS. 1 and 2;
and FIGS. 6A through 6E are flow diagrams illustrating a method for dynamic probabilistic tracking of search targets within a search area according to example embodiments of this disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

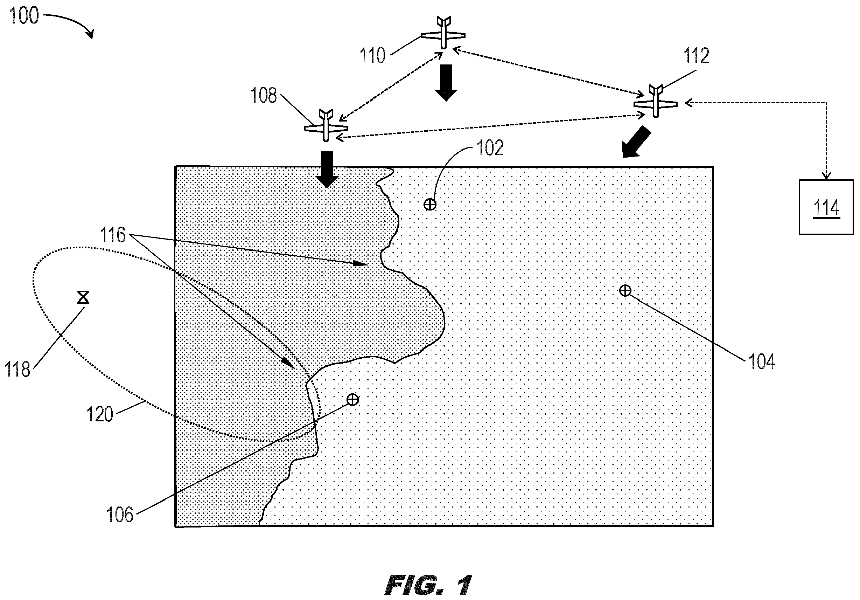

Referring to FIG. 1, a search area 100 is disclosed.

In embodiments, the search area 100 may include a defined area wherein targets 102, 104, 106 are located. For example, the targets 102, 104, 106 may be ground-based targets having locations within the search area 100 that are fixed or static, but unknown to a search team charged with locating the targets within the search area.

In embodiments, the search team may include searching assets 108, 110, 112, and 114. For example, the searching assets 108 and 110 may be unmanned aerial vehicles (UAV) equipped with a variety of sensors (e.g., radio frequency (RF) sensors, radar surveillance systems, electro-optical infrared (EO/IR)) for detecting the targets 102, 104, 106 within the search area 100. In some embodiments, the searching asset 112 may likewise be a sensor-equipped UAV but may not actively search within the search area 100 as determined by a mission plan. For example, if the search area 100 is associated with complex terrain variations 116 and/or complex contours that may frustrate intra-team communications, the searching asset 112 may position itself to serve as a communications relay between the searching assets 108, 112 and a ground control station 114 monitoring the collection and correlation of sensor readings and the deployment of the search team as provided for by a mission plan and/or mission objectives.

However, sensor readings taken by the searching assets 108, 110 may be associated with uncertainty levels and/or error bounds associated with, e.g., terrain variations (116) and/or complex contours within the search area and/or the unique geometries of various types of sensors. For example, given multiple sensor readings taken by multiple searching assets 108, 110 within overlapping portions of the search area 100, multiple target detections may correspond to a single target sensed by multiple assets or to a group of targets, each corresponding to a different location.

In some embodiments, the search area 100 may include more than one type of target to be detected by the search team. For example, the search area 100 may include, in addition to the targets 102, 104, 106 (e.g., primary targets), secondary targets 118. Secondary targets 118 may be unrelated to the primary targets 102, 104, 106 in that the likelihood that a secondary target is within or outside the search area 100 may be independent of the likelihood that the primary targets 102, 104, 106 are located within the search area.

In embodiments, the search team may have no advance information with respect to the locations of the targets 102, 104, 106 within the search area 100 other than the list of unlocated targets. For example, the search team may know (e.g., a mission plan for execution by the search team may provide) only that the targets 102, 104, 106 are located somewhere within the search area 100. However, the locations of the targets 102, 104, 106 within the search area 100 may not be known to a sufficient level of confidence. Similarly, in embodiments the secondary target 118 may be thought or suspected, to a particular confidence level, to be located within a space 120 partially within the search area 100 and partially within an adjacent search area. However, location of the secondary target 118 may not be an objective of the current search mission assigned to the search team.

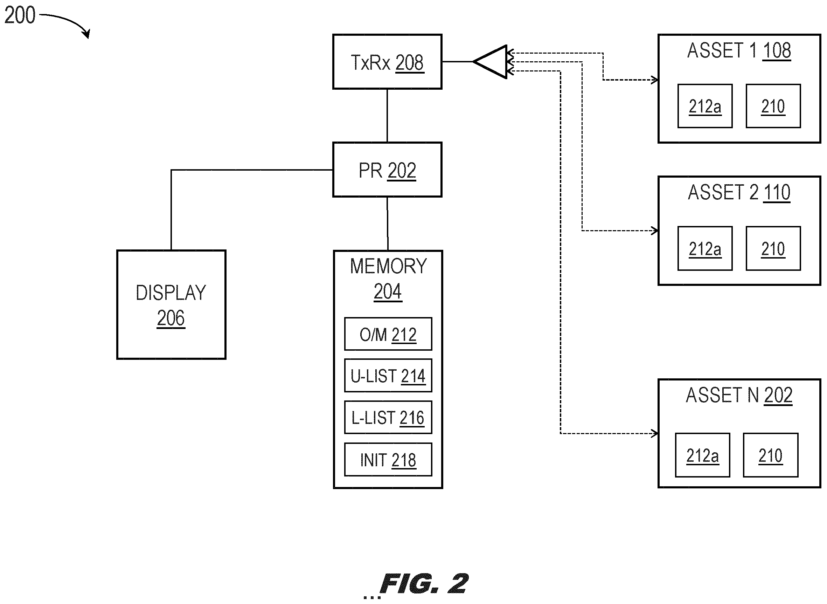

Referring now to FIG. 2, a target tracking system 200 for dynamic probabilistic tracking of search targets within a search area (100, FIG. 1) is shown. The target tracking system 200 may include processors 202, memory 204, display 206, and transmitter/receiver 208 (Tx/Rx).

In embodiments, the target tracking system 200 may be embodied aboard a searching asset (e.g., relaying searching asset 112; FIG. 1) or at a ground control station (114, FIG. 1), in either case collaborating with (or directing the deployment of) other searching assets 108, 110, 202. For example, the target tracking system 200 may receive (e.g., via Tx/Rx 208) sensor data collected by the sensors 210 (e.g., radio frequency (RF) sensors, radar surveillance systems, electro-optical infrared (EO/IR) sensors) aboard each searching asset 108, 110, 202 conducting a search of a search area 100.

In embodiments, the target tracking system 200 may generate an occupancy map 212 of the search area. For example, the occupancy map 212 may include a list of unlocated targets 214 known or thought (to a sufficient confidence level) to be within the search area 100 but in as yet undetermined locations therein. The target tracking system 200 may track the progress of the searching assets 108, 110, 202 by receiving and correlating each set of sensor data received from the searching assets and, based on the received sensor data, updating the occupancy map 212 to reflect the changing probabilities that unlocated targets on the list 214 are located in particular areas of the search area 100.

For example, the searching assets 108, 110, 202 may be searching a portion of the search area 100 for an unlocated target likely to be in that portion of the search area. If after searching a subset of the said portion the searching assets 108, 110, 202 fail to detect the target of interest, this may increase the probability that the target of interest is located within the as yet unsearched subset of the portion of the search area. Similarly, if the target of interest is detected within the subset of the said portion, the probability that the target is located within the unsearched subset may be effectively zero. As unlocated targets are located, e.g., associated with specific locations within the search area 100, they may be moved from the unlocated target list 214 to a located target list 216 also stored to memory. In embodiments, each searching asset 108, 110, 202 may maintain its own occupancy map 212a based on its own search data; as the occupancy map 212 is updated to reflect current search data, the target tracking system 200 may distribute the updated and correlated search data collected by each searching asset 108, 110, 202 to all searching assets via the Tx/Rx 208. In some embodiments, a user or operator may also view the updated occupancy map 212 via the display 206. For example, the user/operator may provide additional control input to the search team, e.g., revised search instructions based on targets already located (if, for example, some or all searching assets 108, 110, 202 do not receive updated sensor datasets from the target tracking system 200 as described below).

In some embodiments, the target tracking system 200 may distribute its own occupancy map 212 to the searching assets 108, 110, 202. However, the target tracking system 200 may preferably distribute received correlated sensor data among the searching assets 108, 110, 202 of the search team. For example, correlated sensor datasets are smaller datasets than the occupancy map 212 as a whole. Further, sharing sensor data instead of the occupancy map 212 eliminates the need for intra-asset arbitration and or synchronization to resolve conflicting versions of the map. Instead, each searching asset 108, 110, 202 of the search team may maintain its own occupancy map 212 based on correlated search data that is both current and common across the search team.

In embodiments, the target tracking system 200 may divide the occupancy map 212 into an array of map cells, each map cell corresponding to a portion of the search area 100. For example, each set of search data sensed by and received from a searching asset 108, 110, 202 may correspond to a portion of the search area 100 within the scope of the sensors 210 aboard that searching asset. Accordingly, each new searched portion of the search area 100 may be at least partially defined by the sensor geometry of the sensors 210 aboard the searching assets 108, 110, 202; e.g., circular, elliptical, polygonal, arcuate, and/or crescent-shaped areas associated with individual sensor geometries of view or more complex shapes associated with multiple sensors and overlapping search/elicit fields. In embodiments, the target tracking system 200 may correlate each set of search data, and the associated portion/s of the search area 100, in terms of the underlying map cells.

In embodiments, a particular search area 100 may be associated with prior knowledge with respect to the probable locations of unlocated targets therein. For example, the target tracking system 200 may store to memory 204 an initial state set 218, "seeding" the occupancy map 212 according to the initial state set to reflect any pre-existing knowledge of the search area 100 prior to search initiation. Pre-existing knowledge may be based upon prior missions through the search area 100 or portions thereof, or any other like intelligence as to the probable or suspected locations of targets on the unlocated target list 214. For example, each map cell of the occupancy map 212 may be set to a uniform default confidence level prior to search initiation, the confidence level associated with the probability that an unlocated target is located within a particular map cell (a uniform confidence level may reflect no particular intelligence beyond the presence of listed unlocated targets somewhere in the search area 100). Alternately, if prior knowledge indicates a higher or lower probability of targets located within particular portions of the search area 100, the initial state set 218 may seed the map cells corresponding to those portions of the search area with a higher or lower initial confidence level. As sensor datasets are received and correlated by the target tracking system 200, the confidence levels associated with individual map cells may be updated to reflect increases or decreases in probability (e.g., as affected by the detection or non-detection of unlocated targets within map cells, which detection or non-detection may have a positive or negative impact on confidence levels elsewhere within the search area 100).

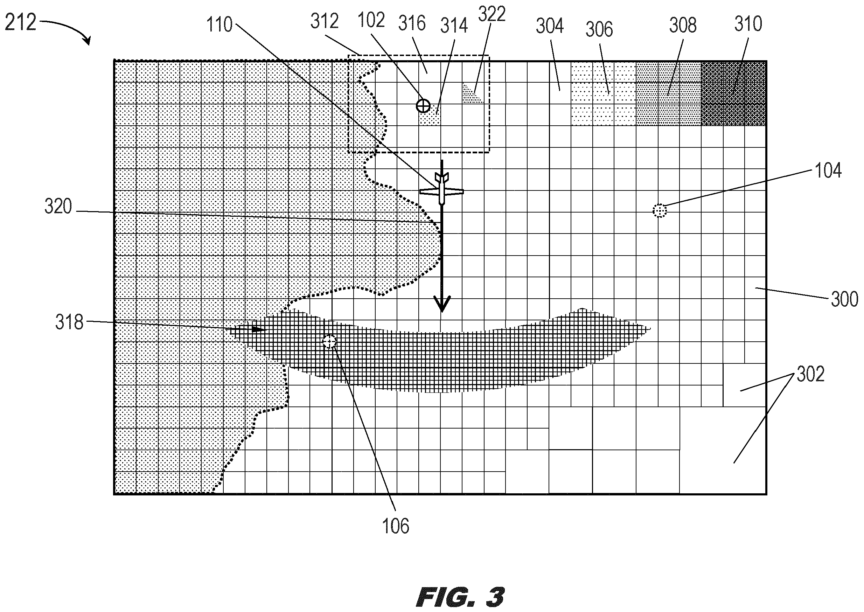

Referring now to FIG. 3, an occupancy map 212 is shown. The occupancy map 212 may correspond to the search area 100 of FIG. 1 within which unlocated targets of interest 102, 104, 106 are disposed at fixed but as yet undetermined locations (e.g., unknown to the search team or entity conducting a search mission).

In embodiments, the target tracking system (200, FIG. 2) may generate the occupancy map 212 by dividing the search area 100 into a set of map cells 300. For example, each map cell 300 may correspond to an individual pixel of an overhead image of the search area 100, or to a larger subset of the search area such that the set of map cells tessellates the search area, and the entire search area corresponds to an integer number of map cells. In some embodiments, each map cell 300 may be of like size and shape, e.g., a set of square or rectangular map cells tessellating a square or rectangular search area. However, it is not necessary for each map cell 300 to be identical.

In some embodiments, map cells 300 may be irregularly sized or variably shaped, e.g., to reflect variance or diversity of confidence levels within a search area 100 prior to commencement of a search mission, if the initial state set (218, FIG. 2) does not default to a uniform confidence level across the search area. For example, if an initial state set 218 corresponding to the search area 100 indicates that a portion of the search area is associated with consistent probabilities of unlocated target presence (e.g., little or no change in confidence levels), that portion of the search area may be associated with a relatively sparse distribution of larger map cells 302. Similarly, if the initial state set 218 indicates a portion of the search area 100 as associated with high variance in probability of unlocated target detection (e.g., rapidly changing confidence levels across a smaller portion of the search area), that portion may be associated with a denser distribution of smaller map cells 300.

In embodiments, each individual map cell 300 may be associated with a confidence level, or a probability that an unlocated target on the unlocated target list (214, FIG. 2) is located within that map cell. For example, the occupancy map 212 may provide for a relatively coarse set of a few discrete confidence levels, e.g., zero (or default) probability 304, low probability 306, moderate probability 308, or high probability 310 that an unlocated target is within a particular map cell. In some embodiments, the occupancy map 212 may incorporate finer or more precise probability distributions, e.g., confidence levels based on integer or floating-point percentages of target presence.

In embodiments, an initial confidence level associated with a particular map cell 300 may be based on an initial state set 218 assigning to a portion of the occupancy map 212 including that map cell (e.g., a group of adjoining map cells) a confidence level that an unlocated target from the unlocated target list 214 is within that portion of the occupancy map. Accordingly, as a search mission progresses through the search area 100, the location of a target 102 to an acceptable level of accuracy (e.g., within a particular map cell 302) may affect the confidence levels of other map cells 300 throughout the occupancy map 212. For example, if the portion 312 of the occupancy map 212 including the map cell 314 was associated with a high confidence level (e.g., a high probability that a target 102 was located within that portion, either initially or prior to location of the target), the precise location of the target 102 within the map cell 314 may have a negative impact on the confidence level of all other cells within that portion 312 of the occupancy map, as the probability of a target being located in any other map cell within that portion decreases. Similarly, if any other map cell 316 within the portion 312 of the occupancy map is searched without the target 102 being located therein, the confidence level of all remaining unsearched map cells within the portion 312 may rise. By way of a non-limiting example, the searching asset 110 may be associated with a current sensor geometry 318 having a crescent shape, e.g., corresponding to an angular field of view for the searching asset's sensors and a consistent forward flight path 320. The precise location of the target 102 within the current sensor geometry 318 would adversely affect the probability of an unlocated target anywhere else within the current sensor geometry (if, for example, the searching assets 110 detects a single target, the precise location of the target 102 may describe where that target is, and the probability of another unlocated target within the current sensor geometry would therefore decrease or be eliminated entirely).

In some embodiments, confidence levels associated with the occupancy map 212 may be adjusted based on a partial search of a particular map cell 322. For example, the target tracking system 200 may be associated with mission rules providing for optimistic or pessimistic adjustments to the confidence levels associated with individual map cells based on a partial search of the map cell 322. For example, partially searched map cells within the sensor geometry 318 may be optimistically included with fully searched map cells to indicate a potential target detection within the searched portion (and a corresponding lack of unlocated target/s within the unsearched portion. Similarly, the partially searched map cells may be pessimistically excluded from fully searched cells to indicate no target detection within the partially searched portion, and thus a lingering probability of target detection within the unsearched portion of the map cell. In embodiments, when lowering a confidence level of target detection across a portion 312 of the occupancy map 212, the partially searched map cell 322 may be "pessimistically" excluded from the portion 312, i.e., the confidence level of the partially searched map cell 322 may remain unchanged to reflect the possibility that the unlocated target 102 may be located within the unsearched portion.212.

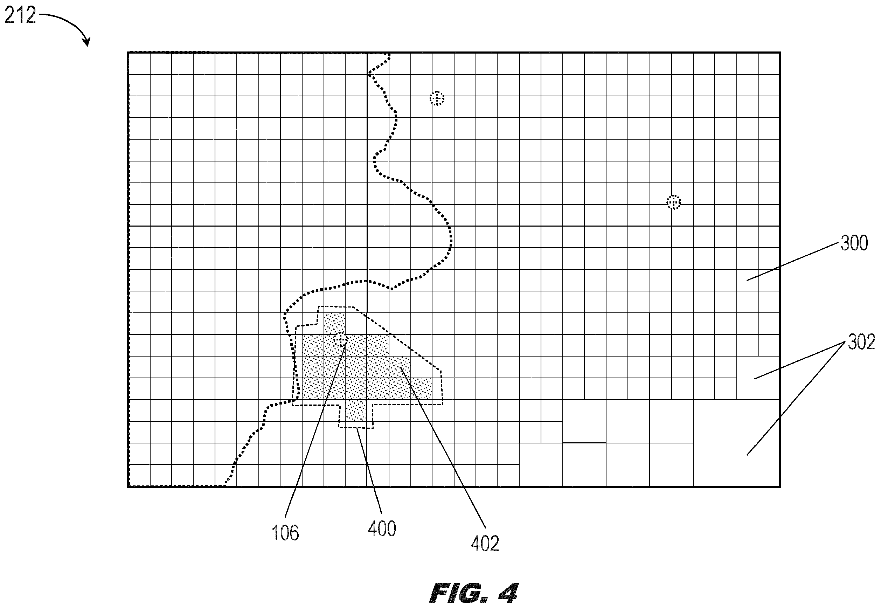

Referring also to FIG. 4, the initial state set (218, FIG. 2) may "seed" the occupancy map 212 with a uniform default confidence level across all map cells 300/302, or the initial state set may apply prior knowledge of the search area 100, e.g., from previous missions or trusted sources, before the search mission commences. For example, trusted intelligence received by the target tracking system 200 may indicate a high probability of the unlocated target 106 within a pre-seeded region 400 of the occupancy map 212 (although it may not be known with any greater precision the specific map cell 300 within which the target is located). Accordingly, individual map cells 402 within the pre-seeded region 400 may be seeded with a relatively high confidence level prior to commencement of the search mission.

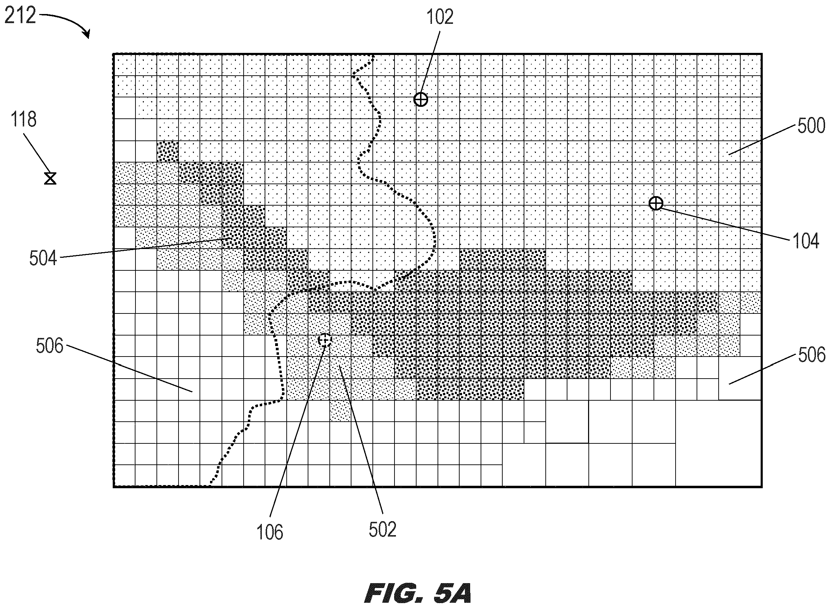

Referring now to FIGS. 5A through 5C, the occupancy map 212 is shown at successive stages of a search mission through the search area 100.

Referring to FIG. 5A, a significant portion of the search area 100 has been searched and the unlocated targets 102 and 104 have been precisely located therewithin. In embodiments, when the unlocated targets 102 and 104 are precisely located, the target tracking system (200, FIG. 2) may remove these targets from the unlocated target list (214, FIG. 2) and add these targets to the located target list (216, FIG. 2).

Accordingly, map cells 500 within the searched portion of the occupancy map 212 may indicate a low probability of any unlocated targets therein, as the map cells 500 have already been searched and any unlocated targets within that portion have been located. In embodiments, map cells 502 may be associated with a moderate to high probability of an unlocated target 106 of a first type (e.g., a primary target) located therewithin. For example, the map cells 502 may include the pre-seeded region (400, FIG. 4) which may indicate a likewise high, or even higher, probability of the unlocated target 106 being located therewithin.

Similarly, in embodiments the map cells 504 may be associated with a moderate to high probability of an unlocated target 118 of a second type (e.g., a secondary target) located therewithin. The unsearched remainder of the occupancy map 212 may be associated with a default confidence level 506, e.g., if no additional information about unlocated target within this portion of the search area 100 is known.

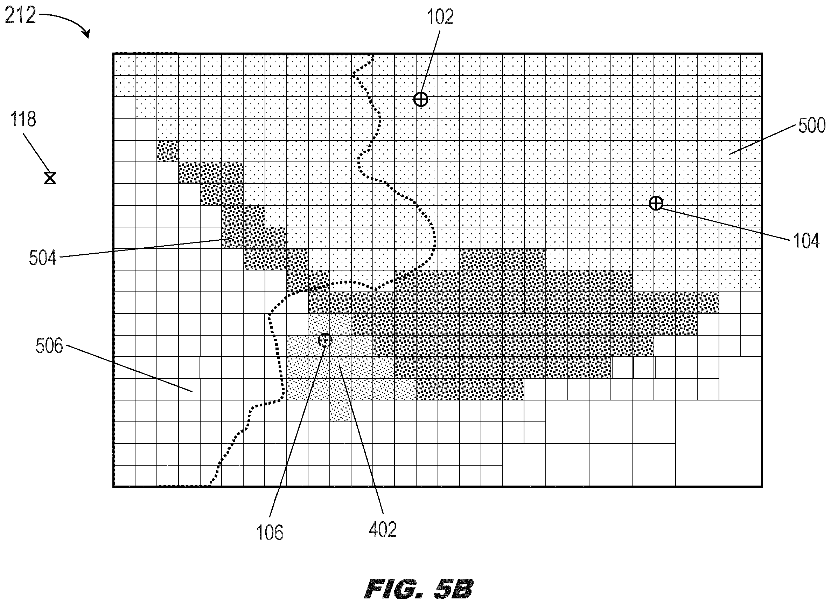

Referring now to FIG. 5B, the unlocated secondary target 118 has been precisely located (e.g., adjacent to the search area 100 but within the space (120, FIG. 1)) and the secondary target has been removed from all unlocated target lists (214, FIG. 4). Accordingly, in embodiments the remaining map cells (504, FIG. 5A) of the occupancy map 212, previously associated a relatively high probability of detection of the unlocated secondary target 118 therewithin, may be simultaneously set to zero probability/lowest possible confidence level of detection of the secondary target 118 (e.g., as this target has been located elsewhere) and default probability/confidence level of detection 506 of the unlocated primary target 106. For example, excluding the pre-seeded portion (400, FIG. 4) of map cells 402 indicating a higher level of confidence of detection of the unlocated primary target 106, the remaining map cells may not be associated with any special intelligence with respect to the unlocated primary target 106 and may not yet have been searched.

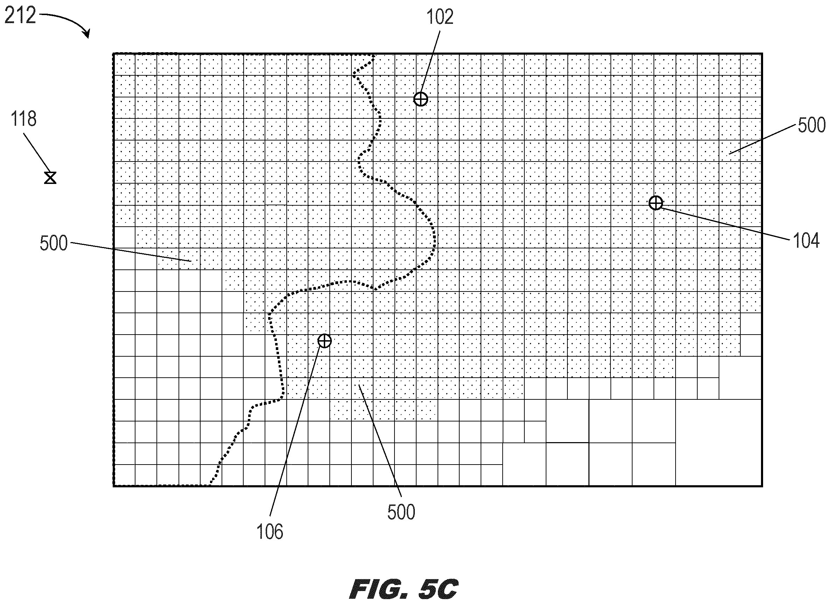

Referring now to FIG. 5C, the primary target 106 has also been precisely located by the target tracking system 200 based on received search data from the searching assets (108, 110, 202; FIGS. 1-2). In embodiments, all searched map cells 500 within the occupancy map 212 may be adjusted to indicate a minimal or negligible confidence level of unlocated target detection. For example, as the primary targets 102, 104, 106 and secondary target 118 have all been removed from unlocated target lists (214, FIG. 2) and added to located target lists (216, FIG. 2), any further sensor measurements received by the target tracking system 200 from the searching assets 108, 110, 202 may be traceable to these detected and located targets, and no known unlocated targets may remain within the search area 100.

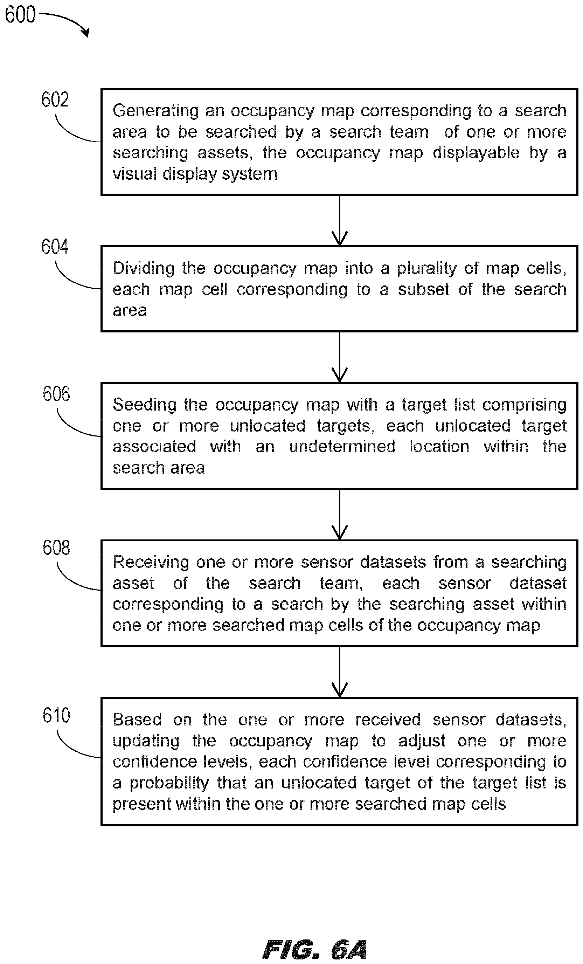

Referring now to FIG. 6A, the method 600 may be implemented by the target tracking system 200 and may include the following steps.

At a step 602, the target tracking system generates an occupancy map of a search area to be searched by a search team of searching assets. For example, the occupancy map is displayable to a user via a display system.

At a step 604, the occupancy map is divided into map cells. For example, the map cells may be uniform in size or shape, or may be variably sized or shaped to reflect likely distribution of unlocated targets throughout the search area.

At a step 606, the target tracking system seeds the occupancy map with an unlocated target list. For example, the unlocated target list includes any target known or thought to be within the search area. A search mission directs the search team to identify or detect each target at a precise location (e.g., map cell) within the search area.

At a step 608, the target tracking system receives and correlates sensor datasets from the searching assets conducting the search mission. For example, received sensor data corresponding to searched portions of the search area may be mapped to specific map cells (or portions thereof) within the occupancy map.

At a step 610, based on received sensor datasets, the target tracking system updates the occupancy map to reflect changes to the confidence levels for detection of unlocated targets across the search area. For example, if unlocated targets are detected or not detected in specific map cells, the confidence level that an unlocated target will be detected in other map cells (e.g., map cells proximate or adjacent to the searched map cells) may rise or fall accordingly.

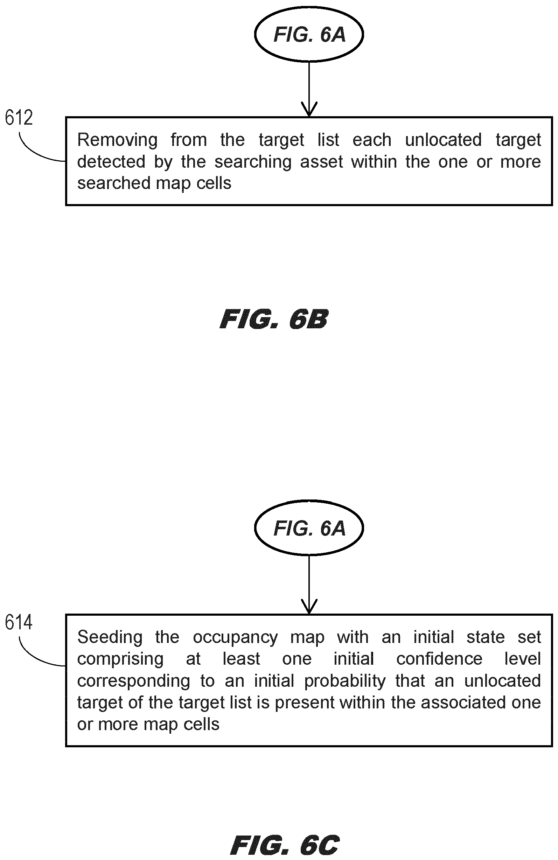

Referring also to FIG. 6B, at a step 612 the target tracking system removes any detected target (e.g., detected at a specific map cell or location) from the list of unlocated targets.

Referring also to FIG. 6C, the method 600 may have an additional step 612. At the step 612, the target tracking system seeds the occupancy map with an initial state set including prior knowledge of the probable locations of unlocated targets within the search area. For example, portions of the occupancy map may be adjusted to indicate a higher or lower initial confidence level that an unlocated target will be detected therein.

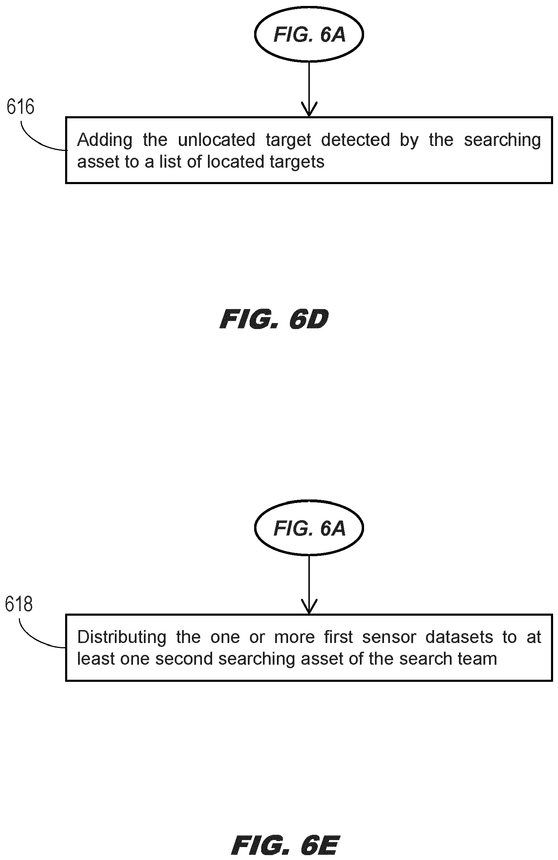

Referring also to FIG. 6D, the method 600 may have an additional step 614. At the step 614, the target tracking system adds any detected target removed from the unlocated target list to a list of located targets identified by the search team and tracked to a precise location within the search area.

Referring also to FIG. 6E, the method 600 may have an additional step 616. At the step 616, the target tracking system may distribute correlated sensor data (e.g., collected from each searching asset) to the searching assets. For example, each searching asset maintains its own copy of the occupancy map; providing each searching asset with search data sensed and collected by other searching assets allows each asset to maintain its own current occupancy map consistent with the occupancy maps maintained by the other searching assets and by the target tracking system.

### CONCLUSION

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A method for dynamic probabilistic tracking of search targets, comprising:
generating an occupancy map (212) corresponding to a search area (100) to be searched by a search team of one or more searching assets (108, 110, 202), the occupancy map displayable by a visual display system (206);
dividing the occupancy map into a plurality of map cells (300), each map cell corresponding to a subset of the search area;
seeding the occupancy map with a target list (214) comprising one or more unlocated targets, each unlocated target associated with an undetermined location within the search area;
receiving one or more sensor datasets from a searching asset of the search team, each sensor dataset corresponding to a search by the searching asset within one or more searched map cells of the occupancy map;
based on the one or more received sensor datasets, updating the occupancy map to adjust one or more confidence levels (304, 306, 308, 310), each confidence level corresponding to a probability that an unlocated target of the target list is present within the one or more searched map cells;
and
removing from the target list each unlocated target detected by the searching asset within the one or more searched map cells.

2. The method of Claim 1, wherein the at least one confidence level is selected from a discrete hierarchy of possible confidence levels, or wherein the at least one confidence level is selected from a continuous set of possible confidence levels.

3. The method of Claim 1 or 2, wherein the at least one confidence level comprises:
a first confidence level (304) corresponding to a first probability that a first unlocated target of the target list is present within the associated one or more map cells;
and
at least one second confidence level (306, 308, 310), each second confidence level corresponding to a second probability that a second unlocated target of the target list is present within the associated one or more map cells.

4. The method of any preceding Claim, wherein dividing the occupancy map into a plurality of map cells, each map cell corresponding to a subset of the search area, includes dividing the occupancy map into:
a first plurality of map cells associated with a first cell size;
and
at least one second plurality of second map cells associated with a second cell size.

5. The method of any preceding Claim, wherein receiving one or more sensor datasets from a searching asset of the search team, each sensor dataset corresponding to a search by the searching asset within one or more searched map cells of the occupancy map, includes:
receiving one or more sensor datasets from a searching asset of the search team, the one or more sensor datasets corresponding to at least one search by the searching asset of at least one portion of a partially searched map cell of the occupancy map.

6. The method of any preceding Claim, further comprising:
seeding the occupancy map with an initial state set (218) comprising at least one initial confidence level corresponding to an initial probability that an unlocated target of the target list is present within the associated one or more map cells.

7. The method of any preceding Claim, further comprising:
adding the unlocated target detected by the searching asset to a list of located targets.

8. The method of any preceding Claim, wherein receiving one or more sensor datasets from a searching asset of the search team includes receiving one or more first sensor datasets from a first searching asset of the search team, further comprising:
distributing the one or more first sensor datasets to at least one second searching asset of the search team.

9. A system for dynamic probabilistic tracking of search targets, comprising:
at least one signal transmitter/receiver (208) configured to receive search data from one or more searching assets (108, 110, 202) associated with a search team;
a memory (204) configured for storing at least one target list (214) comprising one or more unlocated targets, each unlocated target associated with an undetermined location within a search area (100);
and
one or more processors (202) in communication with the memory and the signal receiver, the one or more processors configured to:
generate at least one occupancy map (212) corresponding to the search area;
divide the occupancy map into a plurality of map cells (300);
seed the occupancy map based on the at least one target list;
based on each search dataset of the received search data, the search dataset associated with one or more searched map cells of the occupancy map, update the occupancy map to adjust one or more confidence levels (304, 306, 308, 310), each confidence level corresponding to a probability that an unlocated target of the target list is present within the one or more searched map cells;
and
remove from the target list each unlocated target detected by the one or more searching assets within the one or more searched map cells.

10. The system of Claim 9, wherein each confidence level is selected from a discrete hierarchy of possible confidence levels, or wherein each confidence level is selected from a continuous set of possible confidence levels; and/or wherein the one or more confidence levels comprise:
a first confidence level corresponding to a first probability that a first unlocated target of the target list is present within the one or more searched map cells;
and
at least one second confidence level, each second confidence level corresponding to a second probability that a second unlocated target of the target list is present within the one or more searched map cells.

11. The system of Claim 9 or 9, wherein the occupancy map comprises:
a first plurality of map cells associated with a first cell size;
and
at least one second plurality of second map cells associated with a second cell size.

12. The system of Claim 9, 9 or 11, wherein the received search data includes at least one search dataset corresponding to a partial search by the searching asset of at least one partially searched map cell of the occupancy map.

13. The system of any of Claims 9 to 12, wherein:
the memory is configured for storage of an initial state set associated with the search area, the initial state set comprising at least one initial probability that an unlocated target of the target list is present within one or more map cells of the search area;
and
the one or more processors are configured for seeding the occupancy map based on the initial state set, and/or
wherein the at least one target list is a first target list, and:
the memory is configured for storage of at least one second target list of one or more located targets, each unlocated target associated with a detected location within the search area;
and
the one or more processors are configured for adding each unlocated target detected by the searching asset to the second target list.

14. The system of any of Claims 9 to 14, wherein:
the at least one signal transmitter/receiver is configured to receive first search data from a first searching asset associated with the search team;
and
the one or more processors are configured for distributing, via the at least one signal transmitter/receiver, the first search data to at least one second searching asset associated with the search team.

15. The system of any of claims 9 to 14, wherein:
the search team comprises one or more unmanned aerial vehicles (UAV);
and
the system is embodied in a UAV of the search team.
